# FASCICULE DE BREVET EUROPEEN

(11) **EP 1 978 295 B1**
(45) Date de publication et mention de la délivrance du brevet: **08.08.2018**
(21) Numéro de dépôt: 08153784.7
(22) Date de dépôt: 31.03.2008
(51) Int. Cl.: B60Q 1/26

(54) **Dispositif lumineux de signalisation susceptible d'émettre indépendamment deux faisceaux de signalisation de même intensité et de luminances différentes**
Leuchtsignalvorrichtung, die in der Lage ist, zwei Signalstrahlen gleicher Intensität und unterschiedlicher Leuchtdichte unabhängig voneinander abzugeben
Luminous signalling device capable of independently emitting two signalling beams with the same intensity and different luminances

(30) Priorité: 06.04.2007 FR 0702579
(43) Date de publication de la demande: 08.10.2008
(73) Titulaire: VALEO VISION, 93012 Bobigny (FR)
(72) Inventeur: Reiss, Benoît, 95600, EAUBONNE (FR); Gasquet, Jean-Claude, 89100, SAINT CLEMENT (FR); Kulig, Christian, 75018, PARIS (FR)

(56) Documents cités:
- EP-A2- 1 048 893
- DE-A1- 4 129 094
- DE-A1- 10 022 420
- DE-A1- 19 621 148
- DE-A1-102004 025 214
- DE-A1-102005 021 079
- DE-U1- 20 008 291
- GB-A- 2 418 244
- US-A1- 2003 012 034
- US-A1- 2003 086 276

## Description

L'invention se rapporte à un dispositif lumineux de signalisation pour un véhicule automobile.

L'invention se rapporte plus particulièrement à un dispositif lumineux de signalisation pour un véhicule automobile qui est destiné à réaliser une première fonction de signalisation et qui comporte un premier module optique susceptible d'émettre de manière homogène à travers une face transversale principale d'émission un premier faisceau lumineux de signalisation d'intensité déterminée vers l'arrière globalement selon un axe optique longitudinal.

On connaît déjà des dispositifs de ce type, notamment par le document EP-A2-1.434.000. Ce type de dispositif de signalisation est généralement agencé à l'arrière du véhicule automobile, par exemple pour former un "feu de position" qui a pour fonction de signaler la présence et la largeur du véhicule automobile à des usagers de la route qui sont derrière ledit véhicule.

Un tel dispositif de signalisation présente de nombreux avantages. Il permet notamment d'obtenir un dispositif de signalisation peu encombrant.

Il permet aussi de réaliser des feux de signalisation de formes diverses conférant ainsi un caractère esthétique original au véhicule automobile.

Lorsqu'ils sont activés, ces dispositifs lumineux de signalisation sont parfaitement visibles de loin lorsque la luminosité ambiante est faible, par exemple lorsqu'il fait nuit ou que le temps est très nuageux.

On a cependant constaté que, lorsque la luminosité ambiante est forte, par exemple lorsque le véhicule est éclairé par le soleil, la luminance de la face principale d'émission du dispositif lumineux de signalisation est inférieure à la luminance des reflets sur le véhicule. Ceci donne notamment l'impression à un observateur que le dispositif de signalisation n'est pas activé.

De manière connue, la luminance d'un dispositif lumineux est définie par le rapport de l'intensité en candela (Cd) d'une source lumineuse dans une direction donnée par l'aire en mètre carré (m²) de la surface apparente de la source lumineuse dans cette même direction. L'unité de la luminance est le candela par mètre carré (Cd.m⁻²). Dans le cas de dispositifs lumineux du type décrit précédemment, la surface apparente est formée par la face principale d'émission. Le document DE 10 2005 021079 est considéré comme l'état de la technique plus proche et divulgue les caractéristiques du préambule de la revendication 1. Pour résoudre ce problème, il est connu d'augmenter l'intensité du faisceau lumineux de manière à augmenter la luminance du dispositif de signalisation. Cependant, les normes en vigueur imposent une grille photométrique, et notamment l'intensité d'un feu de signalisation ne doit pas dépasser une intensité maximale admise.

Cette intensité maximale admise est en général trop faible pour permettre d'obtenir une luminance suffisante pour un dispositif lumineux de signalisation comportant une face principale d'émission ayant une aire étendue. Cette limitation de l'intensité du feu de signalisation entraîne donc une limitation de l'aire de la face principale d'émission lors de la conception du dispositif de signalisation.

Pour résoudre ces problème, et notamment pour se libérer de la contrainte relative à la limitation de l'aire de la face principale d'émission, la présente invention propose un dispositif de signalisation du type décrit précédemment, caractérisé en ce le premier module optique comporte une nappe transversale de guidage de la lumière qui est délimitée longitudinalement par une face avant de diffusion comportant des foyers de diffusion de la lumière et par la face arrière principale d'émission, et une source lumineuse principale qui émet des rayons lumineux sensiblement transversalement à l'intérieur de la nappe de guidage par un chant d'entrée de la lumière, les rayons lumineux se propageant dans la nappe de guidage par réflexions totales successives entre les faces de diffusion et principale d'émission, et dans lequel le premier faisceau lumineux de signalisation est formé par des rayons lumineux diffusés par les foyers de diffusion de manière sensiblement homogène à travers la face principale d'émission, en ce qu'il comporte un deuxième module optique qui émet un deuxième faisceau lumineux de signalisation à travers une face transversale secondaire d'émission selon l'axe optique longitudinal, l'aire de la face secondaire d'émission étant inférieure à l'aire de la face principale d'émission du premier module optique, et en ce que le deuxième module optique est susceptible d'être activé indépendamment du premier module optique.

Selon d'autres caractéristiques du dispositif :
- la face secondaire d'émission est formée par une portion de la face principale d'émission ;
- le deuxième module optique comporte une source lumineuse secondaire qui est agencée longitudinalement en vis-à-vis de la nappe de guidage de manière à former le deuxième faisceau lumineux de signalisation qui traverse longitudinalement la nappe de guidage en sortant par la portion de face principale d'émission formant la face secondaire d'émission ;
- le premier module optique comporte une pluralité de sources lumineuses principales dont chacune produit une partie du premier faisceau lumineux de signalisation qui traverse une portion associée de la face principale d'émission, au moins une des sources lumineuses principales étant susceptible d'être activée indépendamment des autres pour former une source lumineuse secondaire du deuxième module optique ;
- l'intensité déterminée du premier et du deuxième faisceaux lumineux de signalisation est susceptible de varier dans un intervalle délimité par une intensité minimale effective et par une intensité maximale effective ;
- le deuxième module optique est susceptible de réaliser une deuxième fonction de signalisation par variation de l'intensité du deuxième faisceau lumineux de signalisation au-delà de l'intensité maximale effective ;
- le premier faisceau de signalisation forme une « lanterne » ou un « feu de position », et le deuxième module optique
   - produit un deuxième faisceau lumineux de signalisation remplissant la même fonction de signalisation que le premier faisceau de signalisation lorsqu'il est alimenté sous une puissance électrique inférieure à sa puissance d'alimentation nominale, et
   - réalise la deuxième fonction de "feu de stop" réglementaire lorsqu'il est alimenté sous une puissance électrique nominale ;
- la face secondaire d'émission est agencée à une altitude au moins égale à une partie supérieure la face principale d'émission par rapport au sol.

L'invention concerne aussi un procédé de commande d'un tel dispositif caractérisé en ce que la sélection du deuxième module optique est commandée lorsque l'intensité de la luminosité ambiante est supérieure à un premier seuil prédéterminé d'intensité et/ou lorsque le contraste est inférieur à un seuil prédéterminé de contraste.

Selon d'autres caractéristiques du procédé de commande :
- la sélection du premier et/ou du deuxième modules optiques est réalisée automatiquement en fonction d'un signal électrique émis par un capteur d'intensité lumineuse et/ou de contraste ;
- le capteur d'intensité lumineuse et/ou de contraste est incorporé dans le dispositif lumineux de signalisation ;
- le capteur d'intensité lumineuse et/ou de contraste est constitué du capteur de luminosité commandant l'allumage automatique des feux de croisement ;
- le capteur d'intensité lumineuse et/ou de contraste est constitué d'une caméra ;
- l'intensité du deuxième faisceau lumineux de signalisation produit par le deuxième module optique est légèrement supérieure à l'intensité du premier faisceau lumineux de signalisation produit par le premier module optique ;
- la sélection du premier module optique est commandée lorsque l'intensité de la luminosité ambiante est inférieure ou égale à un deuxième seuil prédéterminé d'intensité ;
- le premier seuil prédéterminé d'intensité est égal au deuxième seuil prédéterminé d'intensité ;
- le premier seuil prédéterminé d'intensité est inférieur au deuxième seuil prédéterminé d'intensité ;
D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective qui représente un véhicule automobile équipé d'un dispositif lumineux de signalisation réalisé selon les enseignements de l'invention ;
- la figure 2 est une vue schématique de côté en coupe longitudinale qui représente le premier module optique du dispositif lumineux de signalisation de la figure 1 ;
- la figure 3 est une vue de derrière qui représente le module lumineux de signalisation équipé d'une pluralité de source lumineuse, le premier module optique étant activé ;
- la figure 4 est une vue similaire à celle de la figure 3 qui représente le deuxième module optique du dispositif de signalisation qui est réalisé selon un premier mode de réalisation de l'invention, le deuxième module optique étant activé tandis que le premier module optique est désactivé ;
- la figure 5 est une vue similaire à celle de la figure 2 qui représente le dispositif lumineux de signalisation selon un deuxième mode de réalisation du deuxième module optique du dispositif de signalisation ;
- la figure 6 est une vue de derrière qui représente le dispositif de signalisation de la figure 5 dans lequel le deuxième module optique est activé ;
- la figure 7 est une vue de derrière qui représente le dispositif de signalisation de la figure 3 qui est partiellement masqué par un jet d'eau ;
- la figure 8 est une vue similaire celle de la figure 7 qui représente le dispositif de signalisation de la figure 7 qui est équipé d'un deuxième module optique réalisé selon le premier mode de réalisation de l'invention, le deuxième module optique étant agencé dans une partie supérieure du dispositif de signalisation ;
- la figure 9 est une vue similaire à celle de la figure 3 dans laquelle seul le premier module optique est activé ;
- la figure 10 est une vue similaire à celle de la figure 9 dans laquelle seul le deuxième module optique est activé ;
- la figure 11 est une vue similaire à celle de la figure 9 dans laquelle les premier et deuxième modules optiques sont activés simultanément.

Pour la suite de la description, on adoptera à titre non limitatif une orientation longitudinale dirigée d'arrière en avant, verticale dirigée de bas en haut, et transversale indiquée par le trièdre "L,V,T" des figures.

Pour la suite de la description, des éléments identiques, analogues ou similaires seront indiqués par des mêmes numéros de référence.

Pour la suite de la description, le terme "intensité" se rapportera à une intensité lumineuse.

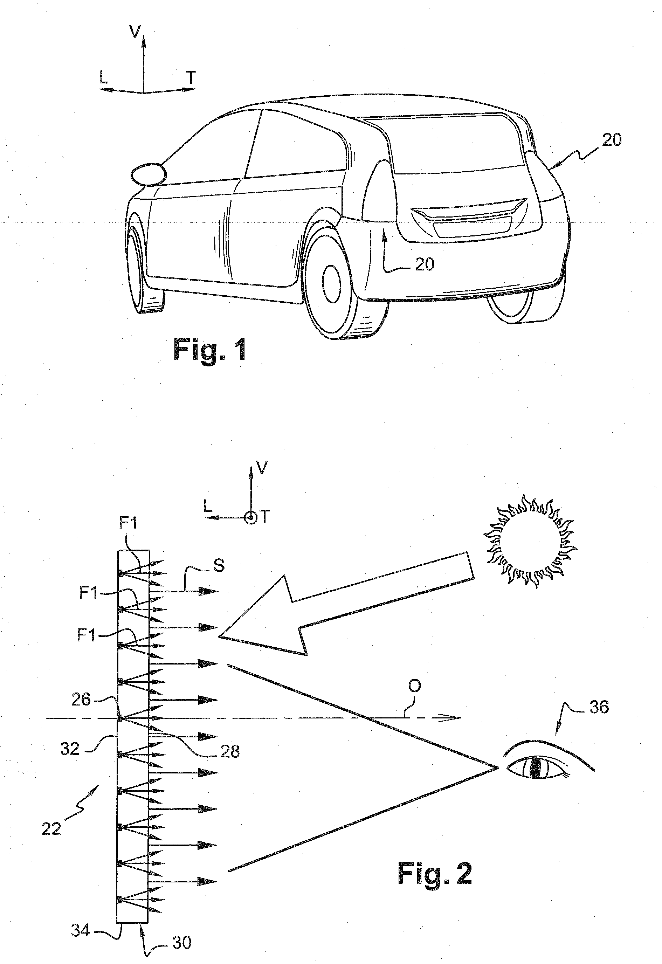

On a représenté à la figure 1 un véhicule automobile à l'arrière duquel sont agencés deux dispositifs lumineux de signalisation 20.

Ces dispositifs lumineux de signalisation 20 sont destinés à réaliser une première fonction de signalisation qui est ici une fonction de "feu de position" ayant pour objectif de signaler la position et la largeur du véhicule à des observateurs situés en arrière du véhicule.

A cette fin, comme représenté à la figure 2, chaque dispositif lumineux de signalisation 20 est susceptible d'émettre un premier faisceau lumineux "F1" de signalisation qui est dirigé vers l'arrière globalement selon la direction globale d'un axe optique "O" longitudinal.

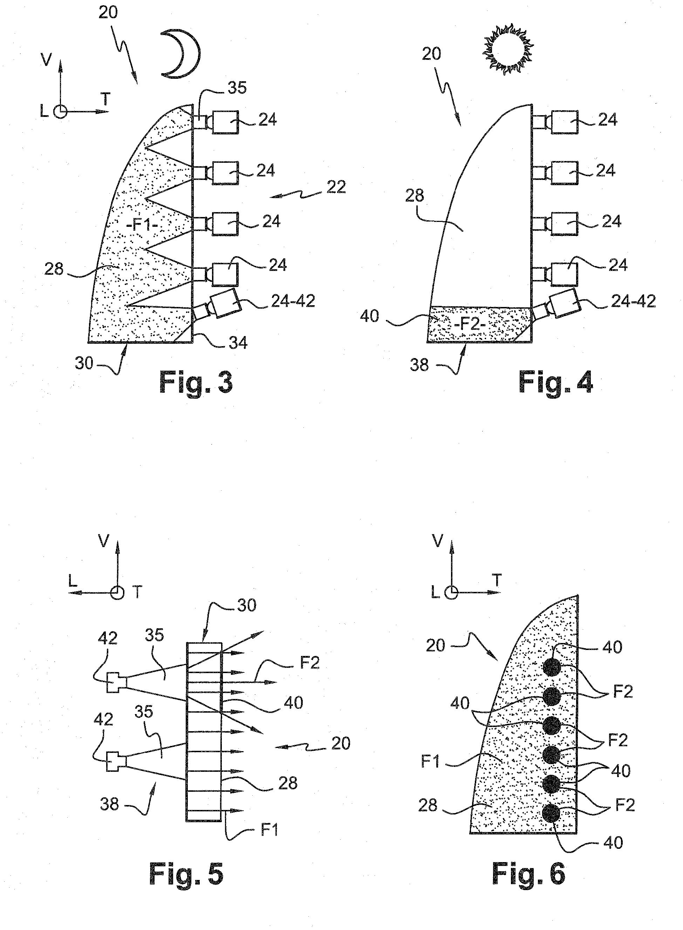

Comme représenté aux figures 2 et 3, le dispositif lumineux de signalisation 20 comporte un premier module optique 22 comportant au moins une source lumineuse principale 24, et des moyens 26 de diffusion de la lumière émise par la source lumineuse principale 24 de manière homogène à travers une face transversale principale 28 d'émission pour former le premier faisceau lumineux de signalisation "F1" d'axe optique "O" longitudinal.

Plus particulièrement, le premier module optique 22 comporte une nappe 30 verticale transversale de guidage de la lumière qui est formée par une plaque d'un matériau transparent ayant un indice de réfraction supérieur à celui de l'air ambiant. La nappe de guidage 30 représentée aux figures est plate, mais l'invention est aussi applicable à des nappes de guidage galbées.

La nappe de guidage 30 est ainsi délimitée longitudinalement par une première face avant de diffusion 32 et par la face arrière transversale principale 28 d'émission. L'épaisseur longitudinale de la nappe de guidage 30 est sensiblement constante, et la face avant de diffusion 32 est parallèle à la face arrière d'émission. Les deux faces de diffusion 32 et d'émission 28 présentent un aspect poli et lisse de manière que des rayons lumineux incidents ayant un angle d'incidence supérieur à un angle limite soient réfléchis de manière spéculaire.

La nappe de guidage 30 est délimitée latéralement par un contour formé de chants 34 longitudinaux.

Les moyens 26 de diffusion de la lumière sont formés par une pluralité de foyers de diffusion 26 de la lumière qui sont agencés dans la face avant de diffusion 32. Les foyers de diffusion 26 sont ici répartis de manière homogène sur la face de diffusion 32 selon un maillage régulier.

Les foyers de diffusion 26 sont par exemple formés par des irrégularités de la face de diffusion 32.

Le premier module optique 22 représenté à la figure 3 comporte une pluralité de sources lumineuses principales 24 qui seront appelées par la suite "sources lumineuses principales" 24 pour les distinguer de la source lumineuse qui sera associée à un deuxième module optique comme cela sera décrit par la suite.

Les sources lumineuses principales 24 sont agencées de manière à émettre des rayons lumineux sensiblement transversalement à l'intérieur de la nappe de guidage 30 par un chant 34 d'entrée de la lumière.

Comme représenté à la figure 3, les sources lumineuses principales 24 sont formées par des diodes électroluminescentes 24 qui sont alignées le long du chant 34 vertical d'entrée de la nappe de guidage 30. Un guide de lumière 35 associé est interposé entre chaque diode principale 24 et le chant 34 d'entrée de manière à collimater les rayons lumineux émis par chaque diode principale 24 en un faisceau lumineux d'entrée afin de donner aux rayons lumineux entrants des directions favorisant leur propagation dans la nappe de guidage 30, c'est-à-dire que les rayons lumineux entrent dans la nappe de guidage 30 avec un angle d'incidence supérieur à un angle limite de réfraction par rapport aux faces 28, 32.

Un tel guide de lumière 35 est décrit plus en détail dans le document EP-A1-1.746.339.

Les rayons lumineux émis par les sources lumineuses principales 24 se propagent dans la nappe de guidage 30 par réflexions totales successives entre la face de diffusion 32 et la face principale d'émission 28 de la lumière. Les rayons lumineux sont ainsi captifs à l'intérieur de la nappe de guidage 30.

Les rayons lumineux captifs qui atteignent un foyer de diffusion 26 sont pour la plupart diffusés avec un angle d'incidence inférieur à l'angle limite de réfraction par rapport à la face principale d'émission 28 de manière qu'ils traversent la face principale d'émission 28 de la lumière pour former le premier faisceau de signalisation "F1" comme représenté à la figure 2.

Chaque source lumineuse principale 24 produit une partie du premier faisceau lumineux de signalisation "F1" qui traverse une portion associée de la face principale d'émission. Par exemple, comme illustré à la figure 3, les rayons lumineux émis par la source lumineuse principale 24 agencée à l'extrémité supérieure du chant 34 d'entrée sont diffusés par une portion d'extrémité supérieure de la face principale d'émission 28.

Un observateur 36 qui est situé longitudinalement en arrière du dispositif 20 aura la sensation que le premier faisceau de signalisation "F1" est émis par la totalité de la face principale d'émission 28 de manière homogène par diffusion de la lumière émise par les sources lumineuses principales 24, c'est-à-dire que chaque portion de la face principale d'émission 28 émet une lumière sensiblement de même intensité que les autres portions de la face principale d'émission 28.

Lorsque le maillage des foyers de diffusion 26 est suffisamment fin, l'observateur 36 ne perçoit pas individuellement chaque foyer de diffusion 26, mais il ne voit qu'une face globalement lumineuse.

Une telle nappe de guidage 30 est décrite plus en détail dans le document EP-A2-1.434.000 sous le terme d"'écran", notamment aux paragraphes [0037] à [0043].

Selon une variante non représentée de l'invention, les moyens de diffusion de la lumière sont formés par un écran de diffusion qui transmet les rayons lumineux qui l'atteignent en les diffusant, l'écran formant ainsi la face principale d'émission 28. L'écran est par exemple une plaque dépolie de verre ou de plastique transparent. Dans ce cas, l'écran est interposé dans un faisceau lumineux de signalisation émis par un projecteur adapté à la fonction de signalisation à réaliser.

Les feux de signalisation, et notamment les feux arrière de position, doivent respecter une grille photométrique prescrite par les normes en vigueur. Les normes imposent notamment que l'intensité du faisceau de signalisation "F1" émis par le feu arrière de position soit comprise dans une plage prescrite de valeurs imposée qui est délimitée par une intensité maximale admise et par une intensité minimale admise. Les conditions expérimentales de mesure de l'intensité du faisceau lumineux de signalisation "F1" sont bien connues et elles sont décrites en détail dans les normes associées.

Pour cette raison, le premier faisceau lumineux de signalisation "F1" a une intensité déterminée qui est comprise dans la plage prescrite.

Avantageusement, l'intensité déterminée du premier faisceau lumineux de signalisation "F1" est susceptible de varier dans un intervalle d'usage qui est compris dans la plage prescrite par les normes et qui est délimité par une intensité minimale effective et par une intensité maximale effective.

On a constaté que lorsque le véhicule est exposé à une luminosité ambiante très forte, par exemple lorsque le véhicule est éclairé par le soleil, la luminance de la face principale d'émission 28 du premier module optique 22 est insuffisante pour être perceptible par un oeil humain. Comme représenté schématiquement à la figure 2 par les flèches "S", le reflet du soleil a une luminance plus élevée que celle du premier faisceau de signalisation "F1".

L'invention propose donc d'équiper le dispositif lumineux de signalisation 20 d'un deuxième module optique 38 qui est susceptible de produire un deuxième faisceau lumineux de signalisation "F2" susceptible de remplir la même fonction de signalisation que le premier faisceau de signalisation "F1" et de même intensité que le premier faisceau lumineux de signalisation "F1 ", mais ayant une luminance suffisamment élevée pour être perceptible par un oeil humain lorsque le véhicule est exposé à une forte luminosité ambiante.

A cet effet, le deuxième module optique 38 comporte une source lumineuse secondaire 42.

En outre, le deuxième module optique 38 est susceptible d'être activé indépendamment du premier module optique 22 de manière que le module optique 22, 38 le plus adapté à la luminosité ambiante soit activé, comme cela sera expliqué par la suite.

Pour ce faire, l'invention propose que le deuxième faisceau lumineux de signalisation "F2" soit émis par une face secondaire d'émission 40 qui a une aire inférieure à l'aire de la face principale d'émission 28 du premier module optique 22.

En effet, un faisceau lumineux d'une intensité donnée qui est émis par une grande surface apparente paraît moins lumineux à un observateur 36 qu'un faisceau lumineux de même intensité qui est émis par une surface apparente plus petite. En d'autres termes, la luminance du deuxième faisceau lumineux "F2" est supérieure à celle du premier faisceau lumineux "F1".

On a représenté aux figures 3 et 4 un premier mode de réalisation de l'invention.

La source lumineuse secondaire 42 qui produit le deuxième faisceau lumineux de signalisation "F2" est formée par une diode électroluminescente indépendante 42 formant une des sources lumineuses principales 24. Dans l'exemple représenté à la figure 3, la diode indépendante 42 est agencée à une extrémité inférieure du chant 34 d'entrée.

A cet effet, ladite diode indépendante 42 est susceptible d'être activée indépendamment des autres diodes principales 24 pour former selon le cas soit une des sources lumineuses principales 24, soit la source lumineuse secondaire 42.

Comme représenté à la figure 4, la face secondaire d'émission 40 est ainsi formée par une portion de la face principale d'émission 28.

Le deuxième faisceau lumineux de signalisation "F2" est ainsi formé selon le même principe que le premier faisceau lumineux "F1", mais en utilisant seulement une portion de la nappe de guidage 30.

Pour que l'intensité lumineuse du deuxième faisceau lumineux de signalisation "F2" soit égale à l'intensité lumineuse du premier faisceau lumineux de signalisation "F1 ", la puissance lumineuse de la diode indépendante 42 est augmentée.

En effet, pour former le premier faisceau lumineux de signalisation "F1 ", le premier module optique 22 comporte ici cinq diodes principales 24 qui ont toute la même puissance déterminée. Donc, pour former le deuxième faisceau lumineux de signalisation "F2", la puissance lumineuse de la diode indépendante 42 est multipliée au moins par cinq lorsqu'elle forme la source lumineuse secondaire 42.

Pour ce faire, la diode indépendante 42 est équipée de moyens (non représentés) de variation de puissance lumineuse qui sont connus de l'état de la technique.

Selon une variante non représentée de l'invention, le deuxième module optique 38 comporte plusieurs sources lumineuses secondaires 42 qui sont formées par une partie des diodes formant des sources lumineuses principales 24 du premier module optique 22.

Lorsque le deuxième module optique 38 est activé, la luminance de la face secondaire d'émission 40 est plus élevée que la luminance de la face principale d'émission 28.

De plus, la perception du deuxième faisceau lumineux de signalisation "F2" est aussi favorisée par contraste avec les portions "sombres" de la face principale d'émission 28 lorsque seul le deuxième module optique 38 est activé.

Selon un deuxième mode de réalisation de l'invention qui est représenté aux figures 5 et 6, la source lumineuse secondaire 42 est distincte de la source lumineuse principale 24.

La source lumineuse secondaire 42 est agencée longitudinalement en avant et en vis-à-vis de la face avant de diffusion 32 de la nappe de guidage 30 de manière à former le deuxième faisceau lumineux de signalisation "F2" vers l'arrière selon l'axe optique "O".

Le deuxième faisceau lumineux de signalisation "F2" atteint la face avant de diffusion 32 avec un angle inférieur à l'angle limite de réfraction. Il traverse donc la nappe de guidage 30 sans être réfléchi et en sortant par une portion de face principale d'émission 28, cette portion formant la face secondaire d'émission 40.

Plus particulièrement, les sources lumineuses secondaires 42 sont ici au nombre de six, comme représenté à la figure 6.

Les sources lumineuses secondaires 42 sont par exemples formées par des diodes électroluminescentes dont les rayons lumineux sont collimatés par un guide de lumière 35 du type décrit précédemment pour former en partie le deuxième faisceau lumineux de signalisation "F2" dirigé vers l'arrière selon l'axe optique "O" longitudinal.

Chaque source lumineuse secondaire 42 forme un faisceau lumineux partiel qui, en association avec les autres faisceaux lumineux partiels, forme le deuxième faisceau lumineux de signalisation "F2". A cet effet, la somme des intensités des faisceaux lumineux partiels est sensiblement égale à l'intensité déterminée du premier faisceau lumineux de signalisation "F1".

Comme représenté à la figure 6, chaque faisceau lumineux partiel traverse une portion circulaire de la face principale d'émission 28. Dans l'exemple représenté à la figure 6, les portions circulaires sont disjointes. L'ensemble de ces portions circulaires forme la face secondaire d'émission 40. L'aire de la face secondaire d'émission 40 est ainsi égale à la somme des aires desdites portions circulaires.

Chaque faisceau lumineux partiel forme ainsi sur la face principale d'émission 28 un point lumineux de luminance élevée qui est perceptible par un oeil humain, même dans des conditions de forte luminosité ambiante.

Dans ce mode de réalisation, les foyers de diffusion 26 de la nappe de guidage 30 sont de dimensions suffisamment négligeables pour que leur influence soit imperceptible sur le faisceau lumineux partiel produit par chaque source lumineuse secondaire 42.

Selon une variante non représentée de l'invention, le deuxième faisceau lumineux de signalisation "F2" est formé par un projecteur classique, comportant par exemple une lampe à filament en tant que source lumineuse secondaire 42, qui est agencé longitudinalement en avant de la nappe de guidage 30.

Selon un troisième mode de réalisation non représenté de l'invention et par analogie avec la figure 5, le deuxième module optique 38 comporte une face secondaire d'émission 40 qui est distincte de la face principale d'émission 28. Le deuxième module optique 38 est par exemple formé par un projecteur indépendant qui comporte une glace associée formant la face secondaire d'émission 40 de manière à produire un deuxième faisceau lumineux de signalisation "F2" ayant une luminance supérieure à la luminance du premier module optique 22.

Avantageusement, le deuxième module optique 38 réalisé selon l'un quelconque des trois modes de réalisation précédemment décrits est susceptible de réaliser une deuxième fonction de signalisation, par exemple une fonction de "feu de stop", par variation de l'intensité de la source lumineuse secondaire 42 au-delà de l'intensité maximale admise. En effet, selon les normes actuelles, la grille photométrique d'un feu de stop est identique à celle d'un feu de position, à la différence que le feu de stop doit émettre un faisceau lumineux plus intense.

On pourra ainsi réaliser un dispositif lumineux de signalisation émettant un premier faisceau de signalisation « F1 » formant une « lanterne » ou un « feu de position », le deuxième module optique 38 susceptible de produire un deuxième faisceau lumineux de signalisation « F2 » susceptible de remplir la même fonction de signalisation que le premier faisceau de signalisation « F1 » et de même intensité que le premier faisceau lumineux de signalisation "F1", mais ayant une luminance suffisamment élevée pour être perceptible par un oeil humain lorsque le véhicule est exposé à une forte luminosité ambiante étant constitué d'un « feu de stop » sous watté, c'est-à-dire alimenté sous une puissance électrique moindre que sa puissance nominale, le deuxième module optique 38 réalisant la deuxième fonction de "feu de stop" réglementaire lorsqu'il est alimenté sous une puissance électrique nominale.

Selon un autre aspect de l'invention, la luminosité ambiante n'est pas le seul facteur qui empêche un observateur 36 de percevoir la lueur d'un tel dispositif lumineux de signalisation 20.

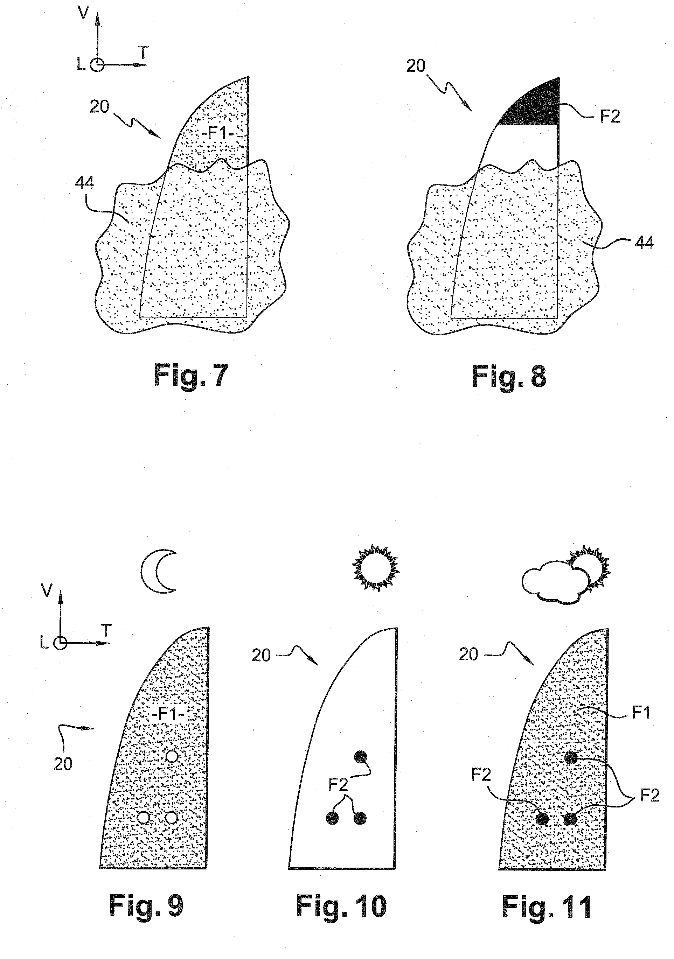

On a en effet constaté que lorsque le véhicule automobile roule sur une route humide, un jet d'eau est pulvérisé par les pneus à l'arrière du véhicule. Le panache d'eau pulvérisée est généralement projeté longitudinalement juste derrière les feux arrière, et il forme un brouillard 44 qui affaiblit l'intensité d'une partie inférieure du premier faisceau de signalisation "F1", comme représenté à la figure 7, en diminuant le contraste, qui devient alors inférieur à un seuil prédéterminé de contraste.

Pour résoudre ce problème, l'invention propose d'agencer la face secondaire d'émission 40 du deuxième module optique 38 à une altitude au moins égale à l'altitude d'une partie supérieure la face principale d'émission 28 par rapport au sol.

On a représenté à la figure 8, le deuxième module optique 38 réalisé selon le premier mode de réalisation, dans lequel la face secondaire d'émission 40 est agencée dans une partie d'extrémité supérieure de la face principale d'émission 28. Ainsi, comme on peut le voir, la face secondaire d'émission 40 est située au-dessus du brouillard 44 de manière que l'intensité du deuxième faisceau lumineux de signalisation "F2" ne soit pas atténuée.

L'invention concerne aussi un procédé de commande du dispositif lumineux de signalisation 20 réalisé selon l'invention.

Comme expliqué précédemment, l'activation du deuxième module optique 38 est réalisée en fonction de la luminosité ambiante. A cet effet, le dispositif lumineux de signalisation 20 est activé en réponse à des signaux fournis par un capteur (non représenté) pour mesurer l'intensité de la luminosité ambiante. Ce capteur pourra être incorporé dans le dispositif lumineux de signalisation 20. Il pourra avantageusement être constitué du capteur de luminosité commandant l'allumage automatique des feux de croisement, ou être constitué d'une caméra.

Avantageusement, la sélection des modules optiques 22, 38 susceptibles d'être activés est commandée automatiquement par une unité électronique de commande (non représentée). Par exemple, le conducteur déclenche manuellement l'activation de la fonction "feu de position", et l'unité électronique de commande sélectionne en fonction de la luminosité ambiante le module optique 22, 38 qui sera effectivement activé en réponse au déclenchement manuel.

Le capteur est ainsi susceptible d'émettre un signal électrique représentatif de la luminosité ambiante à destination de l'unité électronique de commande.

Lorsque l'unité électronique de commande considère que l'intensité de la luminosité ambiante est supérieure à un premier seuil prédéterminé d'intensité, elle commande la sélection du deuxième module optique 38, comme illustré à la figure 10.

Avantageusement, afin que la luminance du deuxième module optique 38 soit maximale, l'intensité du deuxième faisceau lumineux de signalisation "F2" est légèrement supérieure à l'intensité du premier faisceau lumineux "F1".

Lorsque l'unité électronique de commande considère que l'intensité de la luminosité ambiante est inférieure ou égale à un deuxième seuil prédéterminé d'intensité, elle commande la sélection du premier module 22, comme illustré à la figure 9.

Le premier seuil prédéterminé d'intensité est égal au deuxième seuil prédéterminé d'intensité. Ainsi, seul l'un des deux modules optiques 22, 38 est susceptible d'être activé.

Selon une variante du procédé de commande réalisé selon l'invention, le premier seuil prédéterminé d'intensité est inférieur au deuxième seuil prédéterminé d'intensité.

Ainsi, lorsque la luminosité ambiante est dans une zone d'incertitude, par exemple lorsque le soleil décline, les deux modules optiques 22, 38 sont allumés en même temps de manière à pouvoir être perçu par la totalité des observateurs 36, comme représenté à la figure 11.

Dans ce cas, la puissance lumineuse des sources lumineuses principales 24 et secondaires est commandée de manière que la somme de l'intensité des premier "F1" et deuxième "F2" faisceaux lumineux de signalisation ne doit pas être supérieure à l'intensité maximale admise par les normes en vigueur.

L'invention a été décrite en référence à un dispositif lumineux de signalisation 20 agencé à l'arrière du véhicule. On comprendra que cette configuration n'est pas limitative, et que l'invention est aussi applicable à des feux de signalisation avant ou latéraux du véhicule.

## Revendications

1. Dispositif lumineux de signalisation (20) pour un véhicule automobile qui est destiné à réaliser une première fonction de signalisation et qui comporte un premier module optique (22) susceptible d'émettre de manière homogène à travers une face transversale principale d'émission (28) un premier faisceau lumineux de signalisation (F1) d'intensité déterminée vers l'arrière globalement selon un axe optique longitudinal (O), le premier module optique (22) comportant :
- une nappe transversale de guidage (30) de la lumière qui est délimitée longitudinalement par une face avant de diffusion (32) comportant des foyers de diffusion (26) de la lumière et par la face arrière principale d'émission (28), et
- une source lumineuse principale (24) qui émet des rayons lumineux sensiblement transversalement à l'intérieur de la nappe de guidage (30) par un chant (34) d'entrée de la lumière, les rayons lumineux se propageant dans la nappe de guidage (30) par réflexions totales successives entre les faces de diffusion (32) et principale d'émission (28),
- et dans lequel le premier faisceau lumineux de signalisation (F1) est formé par des rayons lumineux diffusés par les foyers de diffusion (26) de manière sensiblement homogène à travers la face principale d'émission (28),
le premier module (22) optique comportant aussi un deuxième module optique (38) qui émet un deuxième faisceau lumineux de signalisation (F2) à travers une face transversale secondaire d'émission (40) selon l'axe optique longitudinal (O), l'aire de la face secondaire d'émission (38) étant inférieure à l'aire de la face principale d'émission (28) du premier module optique (22), le deuxième module optique (38) est susceptible d'être activé indépendamment du premier module optique (22).
**caractérisé en ce que** la face secondaire d'émission (40) est formée par une portion de la face principale d'émission (28).

2. Dispositif (20) selon la revendication 1, **caractérisé en ce que** le deuxième module optique (38) comporte une source lumineuse secondaire (42) qui est agencée longitudinalement en vis-à-vis de la nappe de guidage (30) de manière à former le deuxième faisceau lumineux de signalisation (F2) qui traverse longitudinalement la nappe de guidage (30) en sortant par la portion de face principale d'émission (28) formant la face secondaire d'émission (40).

3. Dispositif (20) selon la revendication 1, **caractérisé en ce que** le premier module optique (22) comporte une pluralité de sources lumineuses principales (24) dont chacune produit une partie du premier faisceau lumineux de signalisation (F1) qui traverse une portion associée de la face principale d'émission (28), au moins une des sources lumineuses principales (24) étant susceptible d'être activée indépendamment des autres pour former une source lumineuse secondaire (42) du deuxième module optique (38).

4. Dispositif (20) selon l'une quelconque des revendications précédentes, **caractérisé en ce que** l'intensité déterminée du premier et du deuxième faisceaux lumineux de signalisation (F1, F2) est susceptible de varier dans un intervalle délimité par une intensité minimale effective et par une intensité maximale effective.

5. Dispositif (20) selon l'une quelconque des revendications précédentes, **caractérisé en ce que** le deuxième module optique (38) est susceptible de réaliser une deuxième fonction de signalisation par variation de l'intensité du deuxième faisceau lumineux de signalisation (F2) au-delà de l'intensité maximale effective.

6. Dispositif (20) selon la revendication précédente, **caractérisé en ce que** le premier faisceau de signalisation « F1 » forme une « lanterne » ou un « feu de position », et **en ce que** le deuxième module optique 38
- produit un deuxième faisceau lumineux de signalisation (F2) remplissant la même fonction de signalisation que le premier faisceau de signalisation (F1) lorsqu'il est alimenté sous une puissance électrique inférieure à sa puissance d'alimentation nominale, et
- réalise la deuxième fonction de "feu de stop" réglementaire lorsqu'il est alimenté sous une puissance électrique nominale.

7. Dispositif (20) selon l'une quelconque des revendications précédentes, **caractérisé en ce que** la face secondaire d'émission (40) est agencée à une altitude au moins égale à une partie supérieure la face principale d'émission (28) par rapport au sol.

8. Procédé de commande du dispositif lumineux de signalisation (20) réalisé selon l'une quelconque des revendications précédentes, **caractérisé en ce que** la sélection du deuxième module optique (38) est commandée lorsque l'intensité de la luminosité ambiante est supérieure à un premier seuil prédéterminé d'intensité et/ou lorsque le contraste est inférieur à un seuil prédéterminé de contraste.

9. Procédé selon la revendication 8, **caractérisé en ce que** la sélection du premier et/ou du deuxième modules optiques est réalisée automatiquement en fonction d'un signal électrique émis par un capteur d'intensité lumineuse et/ou de contraste.

10. Procédé selon la revendication 9, **caractérisé en ce que** le capteur d'intensité lumineuse et/ou de contraste est incorporé dans le dispositif lumineux de signalisation (20).

11. Procédé selon la revendication 9, **caractérisé en ce que** le capteur d'intensité lumineuse et/ou de contraste est constitué du capteur de luminosité commandant l'allumage automatique des feux de croisement.

12. Procédé selon la revendication 9, **caractérisé en ce que** le capteur d'intensité lumineuse et/ou de contraste est constitué d'une caméra.

13. Procédé selon l'une quelconque des revendications 8 à 12, **caractérisé en ce que** l'intensité du deuxième faisceau lumineux de signalisation (F2) produit par le deuxième module optique (38) est légèrement supérieure à l'intensité du premier faisceau lumineux de signalisation (F1) produit par le premier module optique (22).

14. Procédé selon l'une quelconque des revendications 8 à 13, **caractérisé en ce que** la sélection du premier module optique (22) est commandée lorsque l'intensité de la luminosité ambiante est inférieure ou égale à un deuxième seuil prédéterminé d'intensité.

15. Procédé selon la revendication précédente, **caractérisé en ce que** le premier seuil prédéterminé d'intensité est égal au deuxième seuil prédéterminé d'intensité.

16. Procédé selon la revendication 14 prise en combinaison avec la revendication 13, **caractérisé en ce que** le premier seuil prédéterminé d'intensité est inférieur au deuxième seuil prédéterminé d'intensité.

## Patentansprüche

1. Lichtsignalvorrichtung (20) für ein Kraftfahrzeug, die dazu bestimmt ist, eine erste Signalfunktion durchzuführen und die ein erstes optisches Modul (22) aufweist, das ein erstes bestimmtes Signallichtbündel (F1) bestimmter Lichtstärke homogen durch eine quer verlaufende Hauptemissionsseite (28) hindurch nach hinten global gemäß einer optischen Längsachse (0) emittieren kann, wobei das erste optische Modul (22) aufweist:
- eine quer verlaufende Führungslage (30) des Lichts, die in Längsrichtung durch eine Streuungs-Vorderseite (32), die Streuungsbrennpunkte (26) des Lichts aufweist, und durch die hintere Hauptemissionsseite (28) begrenzt wird, und
- eine Hauptlichtquelle (24), die Lichtstrahlen im Wesentlichen quer im Inneren der Führungslage (30) über eine Eingangskante (34) des Lichts emittiert, wobei die Lichtstrahlen sich in der Führungslage (30) durch aufeinanderfolgende Gesamtreflektionen zwischen der Streuungsseite (32) und der Hauptemissionsseite (28) ausbreiten,
- und wobei das erste Signallichtbündel (F1) von Lichtstrahlen gebildet wird, die von den Streuungsbrennpunkten (26) im Wesentlichen homogen durch die Hauptemissionsseite (28) hindurch gestreut werden,
wobei das erste optische Modul (22) auch ein zweites optisches Modul (38) aufweist, das ein zweites Signallichtbündel (F2) durch eine quer verlaufende Sekundäremissionsseite (40) gemäß der optischen Längsachse (0) emittiert, wobei der Bereich der Sekundäremissionsseite (38) kleiner als der Bereich der Hauptemissionsseite (28) des ersten optischen Moduls (22) ist, wobei das zweite optische Modul (38) unabhängig vom ersten optischen Modul (22) aktiviert werden kann,
**dadurch gekennzeichnet, dass** die Sekundäremissionsseite (40) von einem Abschnitt der Hauptemissionsseite (28) gebildet wird.

2. Vorrichtung (20) nach Anspruch 1, **dadurch gekennzeichnet, dass** das zweite optische Modul (38) eine Sekundärlichtquelle (42) aufweist, die in Längsrichtung gegenüber der Führungslage (30) so angeordnet ist, dass sie das zweite Signallichtbündel (F2) bildet, das die Führungslage (30) in Längsrichtung durchquert, indem es durch den Hauptemissionsseitenabschnitt (28) austritt, der die Sekundäremissionsseite (40) bildet.

3. Vorrichtung (20) nach Anspruch 1, **dadurch gekennzeichnet, dass** das erste optische Modul (22) eine Vielzahl von Hauptlichtquellen (24) aufweist, von denen jede einen Teil des ersten Signallichtbündels (F1) erzeugt, das einen zugeordneten Abschnitt der Hauptemissionsseite (28) durchquert, wobei mindestens eine der Hauptlichtquellen (24) unabhängig von den anderen aktiviert werden kann, um eine Sekundärlichtquelle (42) des zweiten optischen Moduls (38) zu bilden.

4. Vorrichtung (20) nach einem der vorhergehenden Ansprüche, **dadurch gekennzeichnet, dass** die bestimmte Lichtstärke des ersten und des zweiten Signallichtbündels (F1, F2) in einem durch eine effektive minimale Lichtstärke und eine effektive maximale Lichtstärke begrenzten Intervall variieren kann.

5. Vorrichtung (20) nach einem der vorhergehenden Ansprüche, **dadurch gekennzeichnet, dass** das zweite optische Modul (38) eine zweite Signalfunktion durch Änderung der Lichtstärke des zweiten Signallichtbündels (F2) jenseits der effektiven maximalen Lichtstärke ausführen kann.

6. Vorrichtung (20) nach dem vorhergehenden Anspruch, **dadurch gekennzeichnet, dass** das erste Signalbündel "F1" ein "Standlicht" oder ein "Begrenzungslicht" bildet, und dass das zweite optische Modul (38)
- ein zweites Signallichtbündel (F2) erzeugt, das die gleiche Signalfunktion wie das erste Signalbündel (F1) erfüllt, wenn es unter einer elektrischen Leistung geringer als seine Nennversorgungsleistung versorgt wird, und
- die zweite ordnungsgemäße Funktion eines "Bremslichts" realisiert, wenn es unter einer elektrischen Nennleistung versorgt wird.

7. Vorrichtung (20) nach einem der vorhergehenden Ansprüche, **dadurch gekennzeichnet, dass** die Sekundäremissionsseite (40) auf einer Höhe mindestens gleich einem oberen Teil der Hauptemissionsseite (28) bezüglich des Bodens angeordnet ist.

8. Verfahren zur Steuerung der nach einem der vorhergehenden Ansprüche hergestellten Lichtsignalvorrichtung (20), **dadurch gekennzeichnet, dass** die Auswahl des zweiten optischen Moduls (38) gesteuert wird, wenn die Stärke der Umgebungsleuchtdichte höher als eine erste vorbestimmte Lichtstärkenschwelle ist, und/oder wenn der Kontrast unter einer vorbestimmten Kontrastschwelle liegt.

9. Verfahren nach Anspruch 8, **dadurch gekennzeichnet, dass** die Auswahl des ersten und/oder des zweiten optischen Moduls automatisch abhängig von einem elektrischen Signal durchgeführt wird, das von einem Lichtstärken- und/oder Kontrastsensor emittiert wird.

10. Verfahren nach Anspruch 9, **dadurch gekennzeichnet, dass** der Lichtstärken- und/oder Kontrastsensor in die Lichtsignalvorrichtung (20) eingebaut ist.

11. Verfahren nach Anspruch 9, **dadurch gekennzeichnet, dass** der Lichtstärken- und/oder Kontrastsensor aus dem Leuchtdichtensensor besteht, der das Einschalten des Abblendlichts steuert.

12. Verfahren nach Anspruch 9, **dadurch gekennzeichnet, dass** der Lichtstärken- und/oder Kontrastsensor aus einer Kamera besteht.

13. Verfahren nach einem der Ansprüche 8 bis 12, **dadurch gekennzeichnet, dass** die Lichtstärke des zweiten Signallichtbündels (F2), das vom zweiten optischen Modul (38) erzeugt wird, geringfügig größer ist als die Lichtstärke des ersten Signallichtbündels (F1), das vom ersten optischen Modul (22) erzeugt wird.

14. Verfahren nach einem der Ansprüche 8 bis 13, **dadurch gekennzeichnet, dass** die Auswahl des ersten optischen Moduls (22) gesteuert wird, wenn die Stärke der Umgebungsleuchtdichte niedriger als die oder gleich einer zweiten vorbestimmten Lichtstärkenschwelle ist.

15. Verfahren nach dem vorhergehenden Anspruch, **dadurch gekennzeichnet, dass** die erste vorbestimmte Lichtstärkenschwelle gleich der zweiten vorbestimmten Lichtstärkenschwelle ist.

16. Verfahren nach Anspruch 14 in Kombination mit Anspruch 13, **dadurch gekennzeichnet, dass** die erste vorbestimmte Lichtstärkenschwelle niedriger ist als die zweite vorbestimmte Lichtstärkenschwelle.

## Claims

1. Luminous signalling device (20) for a motor vehicle, which is intended to provide a first signalling function and which includes a first optical module (22) that is able to emit, rearward, on the whole along a longitudinal optical axis (0), uniformly, through a main transverse emission face (28), a first signalling light beam (F1) of set intensity, the first optical module (22) including:
- a transverse light-guiding layer (30) that is bounded longitudinally by a front scattering face (32) including light-scattering centres (26) and by the back main emission face (28); and
- a main light source (24) that emits light rays substantially transversely into the interior of the guiding layer (30) via an entrance edge face (34) through which the light enters, the light rays propagating through the guiding layer (30) via successive total reflections between the scattering face (32) and the main emission face (28);
- and in which device the first signalling light beam (F1) is formed by light rays scattered by the scattering centres (26) substantially uniformly through the main emission face (28),
the first optical module (22) also including
a second optical module (38) that emits a second signalling light beam (F2) through a secondary transverse emission face (40) along the longitudinal optical axis (0), the area of the secondary emission face (38) being smaller than the area of the main emission face (28) of the first optical module (22), the second optical module (38) being activatable independently of the first optical module (22);
**characterized in that** the secondary emission face (40) is formed by a segment of the main emission face (28) .

2. Device (20) according to Claim 1, **characterized in that** the second optical module (38) includes a secondary light source (42) that is arranged longitudinally facing the guiding layer (30) so as to form the second signalling light beam (F2), which passes longitudinally through the guiding layer (30) and exits via that segment of the main emission face (28) which forms the secondary emission face (40).

3. Device (20) according to Claim 1, **characterized in that** the first optical module (22) includes a plurality of main light sources (24) each of which produces some of the first signalling light beam (F1), which passes through an associated segment of the main emission face (28), at least one of the main light sources (24) being activatable independently of the others to form a secondary light source (42) of the second optical module (38).

4. Device (20) according to any one of the preceding claims, **characterized in that** the set intensity of the first and second signalling light beams (F1, F2) is able to vary within an interval bounded by a minimum effective intensity and by a maximum effective intensity.

5. Device (20) according to any one of the preceding claims, **characterized in that** the second optical module (38) is able to produce a second signalling function by varying the intensity of the second signalling light beam (F2) beyond the maximum effective intensity.

6. Device (20) according to the preceding claim, **characterized in that** the first signalling beam "F1" forms a "lamp" or a "position light", and **in that** the second optical module 38
- produces a second signalling light beam (F2) providing the same signalling function as the first signalling beam (F1) when it is supplied with an electrical power lower than its nominal supply power; and
- produces the regulatory "stoplight" second function when it is supplied with a nominal electrical power.

7. Device (20) according to any one of the preceding claims, **characterized in that** the secondary emission face (40) is arranged at a height at least equal to an upper portion of the main emission face (28) with respect to the ground.

8. Method for controlling the luminous signalling device (20) according to any one of the preceding claims, **characterized in that** the second optical module (38) is selected when the ambient light intensity is higher than a first preset intensity threshold and/or when contrast is lower than a preset contrast threshold.

9. Method according to Claim 8, **characterized in that** the first and/or second optical modules are selected automatically depending on an electrical signal emitted by a light-intensity and/or contrast sensor.

10. Method according to Claim 9, **characterized in that** the light-intensity and/or contrast sensor is incorporated into the luminous signalling device (20).

11. Method according to Claim 9, **characterized in that** the light-intensity and/or contrast sensor is the light-level sensor that controls the automatic turn-on of the low-beam lights.

12. Method according to Claim 9, **characterized in that** the light-intensity and/or contrast sensor is a video camera.

13. Method according to any one of Claims 8 to 12, **characterized in that** the intensity of the second signalling light beam (F2) produced by the second optical module (38) is slightly higher than the intensity of the first signalling light beam (F1) produced by the first optical module (22).

14. Method according to any one of Claims 8 to 13, **characterized in that** the first optical module (22) is selected when the intensity of the ambient light level is lower than or equal to a second preset intensity threshold.

15. Method according to the preceding claim, **characterized in that** the first preset intensity threshold is equal to the second preset intensity threshold.

16. Method according to Claim 14 in combination with Claim 13, **characterized in that** the first preset intensity threshold is lower than the second preset intensity threshold.
